# EUROPÄISCHE PATENTSCHRIFT

(11) **EP 0 598 112 B1**
(45) Veröffentlichungstag und Bekanntmachung des Hinweises auf die Patenterteilung: **16.06.1999**
(21) Anmeldenummer: 93916269.9
(22) Anmeldetag: 04.06.1993
(51) Int. Cl.: G06F 7/544

(54) **VERFAHREN UND ANORDNUNG ZUM BILDEN DER SUMME EINER KETTE VON PRODUKTEN**
PROCESS AND CONFIGURATION FOR ESTABLISHING THE SUM OF A CHAIN OF PRODUCTS
PROCEDE ET DISPOSITIF DE CONSTITUTION DE LA SOMME D'UNE CHAINE DE PRODUITS

(30) Priorität: 06.06.1992 DE 4218769
(43) Veröffentlichungstag der Anmeldung: 25.05.1994
(73) Patentinhaber: Philips Patentverwaltung GmbH, 22335 Hamburg (DE); Koninklijke Philips Electronics N.V., 5621 BA Eindhoven (NL)
(72) Erfinder: BAUER, Harald, D-8500 Nürnberg 30 (DE); SCHUCK, Johannes, D-8505 Röthenbach a.d. P. (DE); HELLWIG, Karl, D-8500 Nürnberg 90 (DE); LORENZ, Dietmar, D-8520 Erlangen (DE)
(74) Vertreter: Volmer, Georg, Dipl.-Ing.
(86) Internationale Anmeldenummer: NL9300117
(87) Internationale Veröffentlichungsnummer: WO9325959

(56) Entgegenhaltungen:
- EP-A- 0 173 383
- EDN ELECTRICAL DESIGN NEWS Bd. 26, Nr. 7, 1. April 1981, NEWTON, MASSACHUSETTS US Seiten 153 - 163 W. BUCKLEN ET AL. 'Single-chip digital multipliers form basic DSP building blocks'
- EDN ELECTRICAL DESIGN NEWS Bd. 32, Nr. 12, 11. Juni 1987, NEWTON, MASSACHUSETTS US J. TITUS 'MAC chips' Seiten 114 - 122, 124, 126

## Beschreibung

Die Erfindung betrifft ein Verfahren zum Bilden der Summe einer Kette von Produkten aus je zwei Zahlen, die nacheinander zugeführt werden, wobei jedes Zwischenergebnis der Summenbildung zwischengespeichert wird, sowie eine Anordnung zum Bilden der Summe einer Kette von Produkten aus jeweils einem ersten und einem zweiten Wert, mit einer Speicheranordnung zum Speichern einer Anzahl von Werten mit einer vorgegebenen ersten Anzahl Bits, einer taktgesteuerten Steueranordnung zum Steuern des Einschreibens von Werten in Register, einer ersten Registeranordnung zum Aufnehmen von jeweils zwei miteinander zu multiplizierenden Werten, einer Multiplizieranordnung mit zwei Eingängen, die mit der ersten Registeranordnung verbunden sind, und einem nachgeschalteten Produktregister mit einem Ausgang für die doppelte erste Anzahl Bits, einer Addieranordnung mit zwei Summeneingängen für je die erste Anzahl Bits, von denen der eine mit dem Ausgang des Produktregisters koppelbar ist, und einem nachgeschalteten Summenregister aus wenigstens zwei Teilsummenregistern für je die erste Anzahl Bits, mit einem Ausgang, der mit dem anderen Eingang der Addieranordnung koppelbar ist.

Derartige Verfahren treten häufig auf bei der digitalen Signalverarbeitung, beispielsweise beim Filtern von Signalverläufen, und derartige Anordnungen werden bei vielen Vielzweck-Signalprozessoren verwendet Um Signalfolgen mit hoher Frequenz verarbeiten zu können, weisen übliche Signalprozessoren zwei Datenbusse auf, um in jeder Taktzeit ein neues Produkt bilden zu können. Da dieses Produkt außerdem die doppelte Anzahl Bits, d.h. die doppelte Wortbreite aufweist, ist die Addieranordnung auch für die doppelte Wortbreite ausgelegt. Dies stellt jedoch einen relativ hohen Aufwand dar.

Derartige Anordnungen sind in dem Artikel Electrical Design News, Band 26, Nummer 7, April 01, 1981, Seiten 153-163 veröfentlicht.

Aufgabe der Erfindung ist es, ein Verfahren der eingangs genannten Art anzugeben, die die Bildung der Summe einer Kette von Produkten mit wenig Aufwand bei nur wenig verringerter Geschwindigkeit ermöglicht.

Diese Aufgabe wird gemäß Anspruch 1 dadurch gelöst, daß bei jeder einzelnen Multiplikation das entstehende Produkt zwischengespeichert wird und in zwei Schritten zum Zwischenergebnis addiert wird, indem im ersten Schritt nur die Stellen niedrigster Wertigkeit des Produkts zu den entsprechenden Stellen des Zwischenergebnisses addiert und die dabei entstehende erste Teilsumme zwischengespeichert wird und im zweiten Schritt die restlichen Stellen höherer Wertigkeit des Produkts zu den entsprechenden restlichen Stellen der Zwischensumme und dem Übertrag der ersten Teilsumme addiert und die dabei entstehende zweite Teilsumme zwischengespeichert wird, wobei in jedem Schritt eine andere der unmittelbar anschließend zu multiplizierenden Zahlen zugeführt wird.

Eine weitere Aufgabe der Erfindung besteht darin, eine Anordnung der eingangs genannten Art anzugeben, die das Bilden der Summe einer Kette von Produkten mit weniger Aufwand bei nur wenig verringerter Geschwindigkeit ermöglicht.

Diese Aufgabe wird gemäß Anspruch 2 dadurch gelöst, daß die Speicheranordnung (12) über nur einen Datenbus (14) für die erste Anzahl Bits mit der ersten Registeranordnung (16,18) verbunden ist und daß die Steueranordnung (10) eingerichtet ist, um abwechselnd in einer ersten und einer zweiten Taktzeit zu arbeiten und in der ersten Taktzeit die erste Anzahl Bits niedrigster Wertigkeit am Ausgang des Produktregisters (22) und den Inhalt des zweiten Teilsummenregisters (32) den Eingängen der Addieranordnung (26) zuzuführen und am Ende dieser Taktzeit einen der ersten Werte (Bᵢ) in die Registeranordnung (16) und die am Ausgang der Addieranordnung (26) vorhandene neue Teilsumme in das zweite Teilsummenregister (32) einzuschreiben und in der zweiten Taktzeit die erste Anzahl Bits höchster Wertigkeit am Ausgang des Produktregisters (22) und den Inhalt des ersten Teilsummenregisters sowie einen zwischengespeicherten Übertrag der Addieranordnung (26) zuzuführen und am Ende dieser Taktzeit einen der zweiten Werte (Aᵢ₊₁) in die Registeranordnung (16,18) und die am Ausgang der Addieranordnung (26) vorhandene zweite Teilsumme in das erste Teilsummenregister sowie das von der Multiplizieranordnung (20) gebildete Produkt in das Produktregister (22) einzuschreiben.

Jede vollständige Teilsumme wird dabei also in zwei Taktzeiten gebildet, so daß die Verarbeitungsgeschwindigkeit insgesamt halbiert ist. Dafür ist jedoch nur ein einfacher Datenbus erforderlich, über den die zu verarbeitenden Werte nacheinander übertragen werden, und es ist ferner auch eine Addieranordnung mit nur der einfachen Wortbreite ausreichend, die die Teilsummen in den beiden Taktzeiten nacheinander bestimmt. Da zunächst nur die Teilsumme aus den Bits niedrigster Wertigkeit gebildet wird, steht für die Bildung der zweiten Teilsumme der Übertrag aus der ersten Teilsumme jeweils zur Verfügung. Dadurch entstehen keine Rundungsfehler, da alle vorhandenen Stellen tatsächlich ausgewertet werden, während das genaue Ergebnis schließlich dem zweiten Teilsummenregister entnommen werden kann.

Ein Ausführungsbeispiel der Erfindung wird nachstehend anhand der Zeichnung näher erläutert. Es zeigen
Fig. 1 ein Blockschaltbild der wichtigsten Teile einer erfindungsgemäßen Anordnung,
Fig. 2 die zeitliche Folge der einzelnen Werte, die an verschiedenen Stellen innerhalb des Blockschaltbildes nach Fig. 1 auftreten.

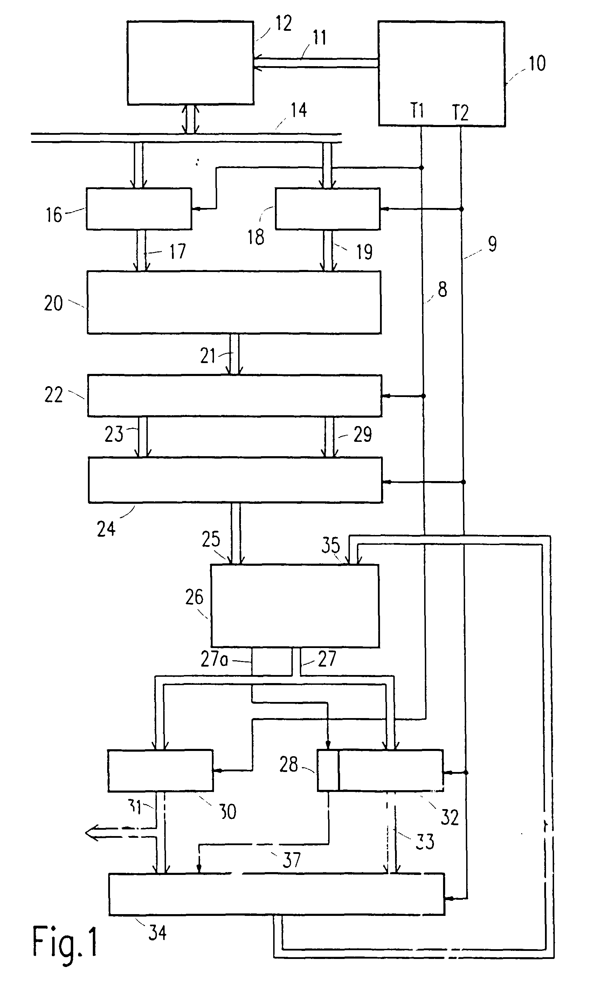

In Fig. 1 erzeugt eine Steueranordnung 10 zwei Steuersignale T1 und T2 auf den Leitungen 8 und 9, die sich zyklisch abwechseln. Ferner erzeugt die Steueranordnung 10 an einem Ausgang 11 Adressen zur Adressierung einer Speicheranordnung 12. Die Verbindung 11 ist hier doppelt gezeichnet, da diese tatsächlich aus einer Anzahl paralleler Leitungen besteht, über die die Bits einer Adresse parallel übertragen werden. Dies gilt auch für die ebenfalls doppelt gezeichneten Datenverbindungen, die ebenfalls tatsächlich aus mehreren Leitungen bestehen, über die die Bits jeweils eines Datenworts parallel übertragen werden.

Der Datenanschluß der Speicheranordnung 12, die auch aus mehreren einzelnen Speichern einschließlich gegebenenfalls Festwertspeichern bestehen kann, ist mit einem Datenbus 14 verbunden, an den außer weiteren, nicht dargestellten Einrichtungen eines Prozessors die beiden Register 16 und 18 parallel angeschlossen sind. Das Einschreiben in diese Register wird durch Steuersignale auf den Leitungen 8 und 9 gesteuert.

Die Ausgänge 17 und 19 der Register 16 und 18, die zum Aufnehmen der miteinander zu multiplizierenden Faktoren bestimmt sind, sind mit den Eingängen einer Multiplizieranordnung 20 verbunden, die innerhalb einer Taktzeit das vollständige Produkt der beiden über die Verbindungen 17 und 19 zugeführten Werte bildet und das Produkt am Ausgang 21 abgibt. Dieses weist die doppelte Wortbreite, d.h. die doppelte Anzahl Bits der zugeführten Faktoren auf. Dies ist die einzige Stelle innerhalb der Anordnung nach Fig. 1, an der eine doppelte Wortbreite auftritt, und die Verbindung 21 ist mit dem Eingang eines Produktregisters 22 verbunden, das ebenfalls für diese doppelte Wortbreite ausgelegt ist.

An das Produktregister 22 sind ausgangsseitig zwei Verbindungen 23 und 29 angeschlossen, von denen die Verbindung 23 die Bits höchster Wertigkeit und die Verbindung 29 die Bits niedrigster Wertigkeit führt, d.h. jede Verbindung hat die einfache Wortbreite. Die Verbindungen 23 und 29 führen auf einen Multiplexer, der über ein Steuersignal auf der Leitung 8 gesteuert die Verbindung 23 oder die Verbindung 29 mit einem Eingang 25 einer Addieranordnung 26 verbindet. Der andere Eingang 35 der Addieranordnung 26 ist mit dem Ausgang eines zweiten Multiplexers 34 verbunden.

Der Summenausgang 27 des Addierers 26 führt parallel auf die Eingänge zweier Teilsummenregister 30 und 32, die über die Steuerleitungen 8 und 9 abwechselnd zum Einschreiben angesteuert werden. Bei dem zweiten Teilsummenregister 32 ist ferner ein Ubertragspeicher 28 vorgesehen, in den parallel zum zweiten Summenregister der am Ausgang 27a der Addieranordnung 26 auftretende Übertrag über die Steuerleitung 8 eingeschrieben wird.

Die Ausgänge 31 und 33 der Teilsummenregister 30 und 32 führen auf die beiden Eingänge des Multiplexers 34, der über die Steuerleitung 8 gesteuert entweder den Ausgang 31 zusammen mit dem Ausgang 37 des Übertragspeichers 28 oder den Ausgang 33 mit dem zweiten Eingang 35 der Addieranordnung 26 verbindet. Der Ausgang 31 führt ferner am Ende der Verarbeitung der Kette von Produkten die gesuchte Summe.

Es ist jedoch häufig zweckmäßig, wenn auch der Inhalt des Registers 32 ausgelesen und anderen Elementen zugeführt werden kann.

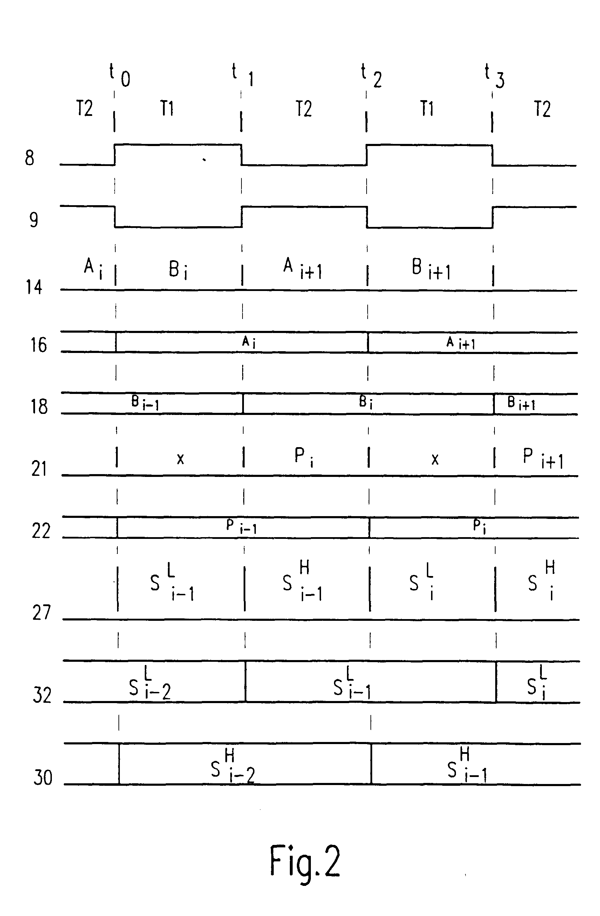

Die Funktion der Anordnung nach Fig. 1 wird nun anhand des schematischen Zeitdiagramms in Fig. 2 erläutert, in der die Zahlen vor den einzelnen Zeilen die Signale bzw. Werte auf den Verbindungen bzw. die Inhalte der Blöcke mit den betreffenden Bezugszeichen angeben. Mit der Anordnung nach Fig. 1 sollen Skalarprodukte, also Ausdrücke der Form 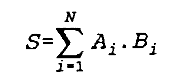 ermittelt werden. Die einzelnen Werte Aᵢ und Bᵢ liegen gespeichert vor, da sie zu definierten Zeitpunkten benötigt werden. Die Zwischensummen, die nach der Aufsummierung jedes neuen Produktes Pᵢ = Aᵢ · Bᵢ entstehen, werden jeweils zwischengespeichert, wobei die vorhergehenden Zwischensumme überschrieben wird. Die nach dem letzten Produkt gebildete Zwischensumme ist dann gleichzeitig das Endergebnis.

Bei dem Zeitdiagramm in Fig. 2 wird zunächst davon ausgegangen, daß die ersten Produkte bereits verarbeitet sind und die entsprechende Zwischensumme gebildet ist. Der Zeitpunkt t₀ am Ende einer zweiten Taktzeit T2 stellt also einen willkürlich gewählten Zeitpunkt innerhalb der Verarbeitung der Kette von Produkten dar. Zu diesem Zeitpunkt t₀ wird der eine Faktor Aᵢ des aktuell zu bildenden Produkts Pᵢ, der während dieser Taktzeit T2 aus der Speicheranordnung 12 ausgelesen wurde, in das Register 16 eingeschrieben, und zwar durch das ansteigende Signal auf der Leitung 8 für die erste Taktzeit T1. Gleichzeitig wird das in der Multiplizieranordnung 20 gebildete vorhergehende Produkt Pᵢ₋₁ in das Produktregister 22 eingeschrieben. Die Teilsummenregister 30 und 32 werden an dieser Stelle noch nicht näher betrachtet.

In der folgenden Taktzeit T1 nach dem Zeitpunkt t₀ wird der zweite Wert Bᵢ des zu bildenden Produktes aus der Speicheranordnung 12 ausgelesen und über den Datenbus 14 dem Eingang des Registers 18 zugeführt. Durch das niedrige Signal auf der Steuerleitung 9 während dieser Taktzeit wird der Multiplexer 24 so gesteuert, daß die Verbindung 29 mit den Bits niedrigster Wertigkeit des Produktes Pᵢ₋₁ dem Eingang 25 der Addieranordnung 26 gekoppelt ist, und gleichzeitig wird über den in gleicher Weise gesteuerten Multiplexer 34 der Ausgang 33 des Teilsummenregisters 32 mit dem Eingang 35 der Addieranordnung 26 gekoppelt. Diese bildet während der Taktzeit T1 die Teilsumme S^{L}ᵢ₋₁ und gibt diese gegen Ende der Taktzeit T1 am Ausgang 27 ab.

Am Ende der Taktzeit T1, nämlich zum Zeitpunkt t₁, wenn das Signal auf der Steuerleitung 8 niedrig und auf der Steuerleitung 9 hoch wird, wird die so gebildete Hälfte niedrigster Wertigkeit der Teilsumme in das zweite Summenregister 32 eingeschrieben, und gleichzeitig wird das über den Ausgang 27a abgegebene Ubertragsignal in den Übertragspeicher 28 eingeschrieben. Außerdem wird der zweite Faktor Bᵢ des zu bildenden Produktes in das Register 18 eingeschrieben. Ferner werden die beiden Multiplexer 24 und 34 umgeschaltet, so daß nun der Eingang 25 der Addieranordnung 26 die Bits höchster Wertigkeit des Produktes Pᵢ₋₁ am Ausgang 23 des Produktregisters 22, dessen Inhalt unverändert geblieben ist, empfängt, und gleichzeitig empfängt der Eingang 35 der Addieranordnung 26 die im ersten Teilsummenregister 30 enthaltenen Bits höherer Wertigkeit der vorhergehenden Teilsumme sowie außerdem den am Ausgang 37 abgegebenen Übertrag aus dem Übertragspeicher 28, so daß nun der Teil höchster Wertigkeit der neuen Zwischensumme in der Addieranordnung 26 gebildet und am Ausgang 27 abgegeben wird, und gleichzeitig bildet die Multiplizieranordnung 20 das nächste Produkt Pᵢ, da nun beide Werte Aᵢ und Bᵢ in den Registern 16 und 18 vorliegen. Außerdem adressiert die Steueranordnung 10 den ersten Wert Aᵢ₊₁ für das folgende Produkt Pᵢ₊₁ und führt diesen Wert über den Bus 14 u.a. dem Register 16 zu.

Am Ende der Taktzeit T2, zum Zeitpunkt t₂, wird nun das Steuersignal auf der Leitung 8 hoch, so daß der Wert Aᵢ₊₁ in das Register 16 eingeschrieben wird, und gleichzeitig wird das vom Multiplizierer 20 am Ausgang 21 abgegebene Produkt Pᵢ in das Produktregister 22 eingeschrieben, und ferner wird der Teil höchster Wertigkeit der vorhergehenden Zwischensumme S^{H}ᵢ₋₁ in das erste Teilsummenregister 30 eingeschrieben. Damit ist die Verarbeitung des Produktes Pᵢ₋₁ abgeschlossen, und das nun im Produktregister 22 enthaltene Produkt Pᵢ kann weiterverarbeitet werden.

Dies geschieht in der zweiten dargestellten Taktphase T1, in der der Multiplexer 24 wieder umgeschaltet wird und die Bits niedrigster Wertigkeit des Produktes Pᵢ am Ausgang 29 des Produktregisters 22 dem Eingang 25 der Addieranordnung 26 zuführt. Gleichzeitig erhält der andere Eingang 35 der Addieranordnung 26 die vorhergehende Teilsumme S^{L}ᵢ₋₁ über den Multiplexer 34 vom Ausgang 33 des zweiten Teilsummenregisters 32, und die neue Teilsumme niedrigster Wertigkeit S^{L}ᵢ wird am Ausgang 27 der Addieranordnung 26 erzeugt und am Ende der Taktzeit T1, zum Zeitpunkt t₃, in das zweite Teilsummenregister 32 eingeschrieben. Gleichzeitig wird im übrigen der zweite Wert Bᵢ₊₁, der während der Taktzeit T1 ausgelesen wurde, in das Register 18 eingeschrieben.

In der dritten dargestellten Taktzeit T2 wird nun am Ausgang 21 des Multiplizierers 20 das folgende gültige Produkt Pᵢ₊₁ gebildet, und gleichzeitig werden dem Eingang 25 der Addieranordnung 26 die Bits höchster Wertigkeit aus dem Produktregister 22 und dem Eingang 35 die vorhergehende Teilsumme höchster Wertigkeit S^{H}ᵢ₋₁ des ersten Teilsummenregisters 30 sowie das Übertragsignal vom Übertragspeicher 28 zugeführt, so daß die neue Teilsumme höchster Wertigkeit S^{H}ᵢ am Ausgang 27 der Addieranordnung 26 gebildet wird. Diese wird am Ende der dritten dargestellten Taktzeit T2 wieder in das erste Teilsummenregister 30 eingeschrieben.

Dieser Vorgang setzt sich zyklisch fort, bis alle Produkte der Kette berechnet und durch Aufakkumulieren in die Teilsummenregister verarbeitet sind. Wie aus Fig. 2 zu erkennen ist, erfolgt die Verarbeitung dabei nach dem Fließbandprinzip, d.h. während ein Produkt gebildet wird, wird gleichzeitig die vorhergehende Teilsumme gebildet und die Werte des nachfolgenden Produktes zugeführt. Am Anfang, d.h. bei der Bildung des ersten Produktes P₁, sind daher einige Verarbeitungsschritte vorab erforderlich.

Diese sind aus Fig. 2 ersichtlich, wenn i = 1 gesetzt wird. Das bedeutet, daß vor dem Zeitpunkt t₀ zunächst der eine Wert A₁ ausgelesen und zum Zeitpunkt t₀ in das Register eingeschrieben werden muß. Danach wird der zweite Wert B₁ ausgelesen und zum Zeitpunkt t₁ in das Register 18 eingeschrieben. Danach kann das erste Produkt P₁ gebildet werden, das zum Zeitpunkt t₂ in das Produktregister 22 eingeschrieben wird. Nun kann das Produkt P₁ in der bereits beschriebenen Weise verarbeitet werden, wobei während dieser vorhergehenden Verarbeitungsschritte die Teilsummenregister 30 und 32 selbstverständlich gelöscht sein müssen, d.h. sie müssen den Wert Null enthalten.

Auf diese Weise wird die Summe einer Kette von Produkten gebildet, wobei die volle Genauigkeit ohne Rundungsfehler erhalten bleibt und dennoch nur ein Addierer für die einfache Wortbreite erforderlich ist.

## Patentansprüche

1. Verfahren zum Bilden der Summe einer Kette von Produkten aus je zwei Zahlen, die nacheinander zugeführt werden, wobei jedes Zwischenergebnis der Summenbildung zwischengespeichert wird,
dadurch gekennzeichnet, daß bei jeder einzelnen Multiplikation das entstehende Produkt zwischengespeichert wird und in zwei Schritten zum Zwischenergebnis addiert wird, indem im ersten Schritt nur die Stellen niedrigster Wertigkeit des Produkts zu den entsprechenden Stellen des Zwischenergebnisses addiert und die dabei entstehende erste Teilsumme zwischengespeichert wird und im zweiten Schritt die restlichen Stellen höherer Wertigkeit des Produkts zu den entsprechenden restlichen Stellen der Zwischensumme und dem Übertrag der ersten Teilsumme addiert und die dabei entstehende zweite Teilsumme zwischengespeichert wird, wobei in jedem Schritt eine andere der unmittelbar anschließend zu multiplizierenden Zahlen zugeführt wird.

2. Anordnung zum Bilden der Summe einer Kette von Produkten aus jeweils einem ersten und einem zweiten Wert, mit einer Speicheranordnung zum Speichern einer Anzahl von Werten mit einer vorgegebenen ersten Anzahl Bits, einer taktgesteuerten Steueranordnung zum Steuern des Einschreibens von Werten in Register, einer ersten Registeranordnung zum Aufnehmen von jeweils zwei miteinander zu multiplizierenden Werten, einer Multiplizieranordnung mit zwei Eingängen, die mit der ersten Registeranordnung verbunden sind, und einem nachgeschalteten Produktregister mit einem Ausgang für die doppelte erste Anzahl bits, einer Addieranordnung mit zwei Summeneingängen für je die erste Anzahl Bits, von denen der eine mit dem Ausgang des Produktregisters koppelbar ist, und einem nachgeschalteten Summenregister aus wenigstens zwei Teilsummenregistern für je die erste Anzahl Bits, mit einem Ausgang, der mit dem anderen Eingang der Addieranordnung koppelbar ist, dadurch gekennzeichnet, daß die Speicheranordnung (12) über nur einen Datenbus (14) für die erste Anzahl Bits mit der ersten Registeranordnung (16,18) verbunden ist und daß die Steueranordnung (10) eingerichtet ist, um abwechselnd in einer ersten und einer zweiten Taktzeit zu arbeiten und in der ersten Taktzeit die erste Anzahl Bits niedrigster Wertigkeit am Ausgang des Produktregisters (22) und den Inhalt des zweiten Teilsummenregisters (32) den Eingängen der Addieranordnung (26) zuzuführen und am Ende dieser Taktzeit einen der ersten Werte (Bᵢ) in die Registeranordnung (16) und die am Ausgang der Addieranordnung (26) vorhandene neue Teilsumme in das zweite Teilsummenregister (32) einzuschreiben und in der zweiten Taktzeit die erste Anzahl Bits höchster Wertigkeit am Ausgang des Produktregisters (22) und den Inhalt des ersten Teilsummenregisters sowie einen zwischengespeicherten Übertrag der Addieranordnung (26) zuzuführen und am Ende dieser Taktzeit einen der zweiten Werte (Aᵢ₊₁) in die Registeranordnung (16,18) und die am Ausgang der Addieranordnung (26) vorhandene zweite Teilsumme in das erste Teilsummenregister sowie das von der Multiplizieranordnung (20) gebildete Produkt in das Produktregister (22) einzuschreiben.

3. Anordnung nach Anspruch 2,
dadurch gekennzeichnet, daß zwischen dem Ausgang des Produktregisters (22) und dem einen Summeneingang der Addieranordnung (26) ein erster Multiplexer (24) und zwischen den Ausgängen der Teilsummenregister (30, 32) und dem anderen Eingang der Addieranordnung (26) ein zweiter Multiplexer (34) geschaltet ist, und daß die Steueranordnung (10) eingerichtet ist, um die Multiplexer zwischen jeder Taktzeit umzuschalten.

## Claims

1. A method of forming the sum of a chain of products of each time two numbers which are successively supplied, each intermediate result of the summing operation being temporarily stored, characterized in that the product produced by each separate multiplication is temporarily stored and added to the intermediate result in two steps, in that during the first step only the least-significant positions of the product are added to the corresponding positions of the intermediate result, the first partial sum thus formed being temporarily stored, whereas during the second step the remaining, more-significant positions of the product are added to the corresponding remaining positions of the intermediate sum and the carry of the first partial sum, the second partial sum thus formed being temporarily stored, during each step there being supplied another one of the numbers to be directly subsequently multiplied.

2. A device for forming the sum of a chain of products of each time a first and a second value, comprising a storage device for storing a number of values with a predetermined first number of bits, a clock-controlled control device for controlling the writing of values in registers, a first register device for storing each time two values to be multiplied by one another, a multiplier device comprising two inputs which are connected to the first register device, and a downstream product register which comprises an output for double the first number of bits, an adder device which comprises two sum inputs for each time the first number of bits, one of said inputs being connectable to the output of the product register, and a downstream sum register which consists of at least two partial sum registers for each time the first number of bits, comprising an output which can be coupled to the other input of the adder device, characterized in that the storage device (12) is connected to the first register device (16, 18) *via* only one data bus (14) for the first number of bits, and that the control device (10) is arranged to operate alternately in a first and a second clock period and to apply, during the first clock period, the first number of least-significant bits at the output of the product register (22) and the contents of the second partial sum register (32) to the inputs of the adder device (26), and to write, at the end of this clock period, one of the first values (Bᵢ) into the register device (16) and the new partial sum, appearing at the output of the adder device (26), into the second partial sum register (32), and to apply, during the second clock period, the first number of most-significant bits at the output of the product register (22) and the content of the first partial sum register as well as a temporarily stored carry to the adder device (26) and to write, at the end of this clock period, one of the second values (Aᵢ₊₁) into the register device (16, 18) and the second partial sum, appearing at the output of the adder device (26), into the first partial sum register as well as to write the product formed by the multiplier device (20) into the product register (22).

3. A device as claimed in Claim 2, characterized in that between the output of the product register (22) and one sum input of the adder device (26) there is connected a first multiplexer (24), whereas a second multiplexer (34) is connected between the outputs of the partial sum registers (30, 32) and the other input of the adder device (26), and that the control device (10) is arranged to switch over the multiplexers after each clock period.

## Revendications

1. Procédé de formation de la somme d'une chaîne de produits à partir de deux nombres qui sont amenés successivement, chaque résultat intermédiaire de la formation de somme étant sauvé à titre intermédiaire,
caractérisé en ce
que, pour chaque multiplication individuelle, le produit formé est sauvé à titre intermédiaire et est additionné en deux étapes pour obtenir un résultat intermédiaire en n'additionnant dans la première étape que les positions de valeur minimale du produit aux positions correspondantes du résultat intermédiaire et en sauvant à titre intermédiaire la première somme partielle formée à cette occasion et, dans la deuxième étape, en additionnant les positions résiduelles de valeur supérieure du produit aux positions résiduelles correspondantes de la somme intermédiaire et au report de la première somme partielle et en sauvant à titre intermédiaire la deuxième somme partielle formée à cette occasion, un autre nombre à multiplier immédiatement ensuite étant amené à chaque étape.

2. Dispositif de formation de la somme d'une chaîne de produits à partir d'une première et d'une deuxième valeur, avec un dispositif de mémoire pour l'enregistrement d'un nombre de valeurs avec un premier nombre préalablement déterminé de bits, un dispositif de commande commandé par rythmeur en vue de la commande de l'enregistrement de valeurs dans un registre, un premier dispositif de registre pour l'enregistrement de deux valeurs à multiplier entre elles, un dispositif multiplicateur avec deux entrées qui sont reliées au premier dispositif de registre et un registre de produits monté en aval avec une sortie pour le double premier nombre de bits, un dispositif additionneur avec deux entrées de sommes pour respectivement le premier nombre de bits dont l'un peut être couplé à la sortie du registre de produits et un registre de somme monté en aval à partir d'au moins deux registres de sommes partielles pour respectivement le premier nombre de bits, avec une sortie qui peut être couplée à l'autre entrée du dispositif additionneur,
caractérisé en ce que le dispositif de mémoire (12) est relié par l'intermédiaire d'un seul bus de données (14) pour le premier nombre de bits avec le premier dispositif de registre (16, 18) et que le dispositif de commande (10) est conçu pour travailler en alternance dans un premier et un deuxième temps de cycle et, dans le premier temps de cycle, amener le premier nombre de bits de valeur minimale à la sortie du registre de produits (22) et le contenu du deuxième registre de sommes partielles (32) aux entrées du dispositif additionneur (26) et, à la fin d'un temps de cycle, l'une des premières valeurs (Bᵢ) dans le dispositif de registre (26) et enregistrer la nouvelle somme partielle présente à la sortie du dispositif additionneur (26) dans le deuxième registre de sommes partielles (32) et, dans le deuxième temps de cycle, amener le premier nombre de bits de valeur maximale à la sortie du registre de produits (22) et le contenu du premier registre de sommes partielles ainsi qu'un report sauvé à titre intermédiaire du dispositif additionneur (26) et, à la fin de ce temps de cycle, enregistrer l'une des deux valeurs (Aᵢ₊₁) dans le dispositif de registre (16, 18) et la deuxième somme partielle présente à la sortie du dispositif additionneur (26) dans le premier registre de sommes partielles ainsi que le produit formé par le dispositif multiplicateur (20) dans le registre de produits (22).

3. Dispositif selon la revendication 2,
caractérisé en ce qu'entre la sortie du registre de produits (22) et l'une des entrées de somme du dispositif additionneur (26) est monté un premier multiplexeur (24) et, entre les sorties du registre de sommes partielles (30, 32) et l'autre entrée du dispositif additionneur (26) est monté un deuxième multiplexeur (34) et que le dispositif de commande (10) est conçu de manière à commuter le multiplexeur entre chaque temps de cycle.
